# EUROPEAN PATENT SPECIFICATION

(11) **EP 3 160 006 B1**
(45) Date of publication and mention of the grant of the patent: **17.04.2019**
(21) Application number: 15191242.5
(22) Date of filing: 23.10.2015
(51) Int. Cl.: H02J 9/06, H02M 3/07, H02J 3/00, H02J 1/00, H02J 7/00

(54) **UNINTERRUPTIBLE POWER SUPPLY**
UNTERBRECHUNGSFREIE STROMVERSORGUNG
SYSTÈME D'ALIMENTATION SANS INTERRUPTION

(43) Date of publication of application: 26.04.2017
(73) Proprietor: Siemens Aktiengesellschaft, 80333 München (DE)
(72) Inventor: Perera, Aravinda, 7037 Trondheim (NO)

(56) References cited:
- WO-A2-2009/012451
- CN-U- 202 817 753

## Description

### Field of invention

The present invention relates to an uninterruptible power supply, in particular for usage in subsea applications, and relates further to a method for providing uninterruptible power supply, in particular during a subsea operation.

### Art Background

During a subsea operation for exploring e.g. oil or gas, an electrical grid may be installed (partially) at the sea bottom which may provide electrical energy to equipment required for performing the subsea operation. The equipment may for example comprise pumps, compressors, motors and the like. The electrical grid may be an AC electrical grid. One or more loads to be supplied with electrical may however require DC power. Furthermore, it may be required to operate these components or equipment in a reliable manner, in particular continuously, for example due to safety concerns. Thus, an uninterruptible DC power supply may be required. The document WO 2009/012451 discloses a highly efficient uninterruptible power distribution architecture to support modular processing units, in which a PFC-boost AC-to-DC conversion is disposed between the utility AC grid and the processing circuit loads thereby defining a DC Bus where such loads are connected. A battery is connected to the DC Bus through a Charge / Discharge control optionally in the form of a charge pump. Each load comprises aditionally a DC-DC converter at its input.

Some other technical proposals of a DC uninterruptible power supply have been given in the state of the art. The conventional uninterruptible DC power supply is relatively large and heavy, is expensive and has a complex design. The component count may be more than 1000 which may lead to concerns regarding reliability.

Thus, there may be a need for an uninterruptible DC power supply which is simpler, lighter and more efficient, is a less expensive product with less number of components compared to the systems of the prior art.

### Summary of the Invention

The need is satisfied by the subject-matter of the independent claims. The dependent claims specify particular embodiments of the present invention.

According to an embodiment of the present invention, it is provided an uninterruptible power supply, comprising: AC input terminals for receiving AC input power, a rectifier connected to the AC input terminals for providing a rectifier output power at rectifier output terminals, a voltage multiplier connected at voltage multiplier input terminals to the AC input terminals for providing a boosted DC voltage at voltage multiplier output terminals, DC output terminals, an output converter connected between the rectifier output terminals and the DC output terminals, the DC output terminals being connectable via the output converter to the voltage multiplier output terminals for providing DC power to a output converter, a switch, and energy storage terminals connected to the voltage multiplier output terminals and connectable via the switch and the output converter to the rectifier output terminals.

The uninterruptible power supply may in particular be an uninterruptible DC power supply, i.e. an electrical power supply that provides continuously, uninterrupted electrical DC power. The power supply may in particular deliver 350 W DC power with a minimum 500 ms back-up time.

In particular, the AC input terminal may comprise three or more AC input terminals, for in particular receiving three-phase AC input power. The rectifier may in particular be a three-phase rectifier, as may be conventionally available. The rectifier may in particular comprise (for each phase) two controllable switches, such as IGBTs, which may be controlled at gate terminals using pulse width modulation signals.

The uninterruptible power supply may be implemented on a circuit board and may be enclosed in a casing protecting from seawater and resisting water pressure at a depth of between 1000 m and 4000 m below sea level. The casing may be sealed to avoid seawater from reaching the inside of the casing where the circuit board with electronic components of the uninterruptible power supply is located.

The voltage multiplier may boost an AC voltage received at the voltage multiplier input terminals to a boosted DC voltage at the voltage multiplier output terminals. The voltage multiplier may be configured in several designs. The voltage multiplier may not comprise any transformer. Thus, the voltage multiplier may be much lighter than a conventionally used switch-mode power supply. A switch-mode power supply may comprise a number of high frequency transformers and inductors that render the conventional uninterruptible power supply heavy and complicated. The voltage multiplier may be considered as a replacement for a switch-mode power supply. In general, a conventionally switch-mode power supply contains at least one magnetic component (a common term for transformers and inductors), e.g. three magnetic components in a charging converter and three in output converter. According to an embodiment of the present invention the job of the conventional charging converter (which is buck-boost switch-mode power supply) may be done by the voltage multiplier.

The uninterruptible power supply may, during normal operation (e.g. in case of absence of any fault), receive the AC input power from the AC input terminals, to which in particular a grid is connected providing the AC input power. During the normal operation, the switch may be open and the rectifier may produce the rectifier output power which may be transmitted to the DC output terminal, from which the load may receive the DC output power.

In case of a failure in the AC input power (for example failure in the electrical grid), no AC input power may be supplied to the AC input terminals. A failure may also occur, when the voltage of the AC input power received at the AC input terminals is lower than a voltage threshold. In case of any of such failures, the switch may be controlled to close such that the energy storage terminals are connected to the DC output terminals. Thus, when an external storage is connected to the energy storage terminals, electrical energy can be continued to be supplied to the load (connected to the DC output terminals) during the failure. Thereby, uninterrupted DC power supply is ensured.

During normal operation, the voltage multiplier may receive a portion of the AC input power and may transform the AC input power to a boosted DC voltage which may then be supplied to the energy storage terminals. When an external energy storage is connected to the energy storage terminals, the external energy storage may be charged using the boosted DC voltage. Potentially, the external electrical storage may be implemented using one or more capacitors. The energy stored in a capacitor may be calculated or estimated as 1/2 C * V², wherein C represents the capacitance and V represents the voltage applied at the capacitor. Thus, the energy stored within the capacitor is proportional to the square of the voltage with which the capacitor is charged. Thus, increasing the voltage using the voltage multiplier advantageously allows to store more energy in the capacitor compared to the situation when the capacitor would be charged with the original voltage, i.e. the (e.g. rectified) AC input voltage.

There may be exactly two voltage multiplier output terminals, one of positive polarity and one of negative polarity. There may be exactly two DC output terminals, one of positive polarity and one of negative polarity. There may also be exactly two energy storage terminals, for connecting a DC energy storage. Thus, a reliable, light, less complicated, inexpensive and simple uninterruptible DC power supply may be provided.

According to an embodiment of the present invention, the voltage multiplier comprises: for each of the, in particular three, voltage multiplier input terminals: a voltage multiplier input capacitor, a first diode and a second diode, wherein the first diode and the second diode is connected between the voltage multiplier output terminals, wherein the voltage multiplier input capacitor has one terminal connected to the respective voltage multiplier input terminal and another terminal connected between the first diode and the second diode.

The input capacitors may for example have a capacitance between 50 µF and 500 pF, depending on the energy capacity of the energy storage and how fast should it be charged. The voltage multiplier may rectify and also boost the voltage received at the (in particular three) voltage multiplier input terminals. The first diode and the second diode may be connected such that the cathode of the first diode is connected with the anode of the second diode. Thus, the first diode and the second diode may allow, at different times, current flow in the same direction. While the diodes may contribute to the rectifying function, the respective voltage multiplier input capacitor may contribute to the amplification function. The voltage multiplier may in particular comprise three voltage multiplier input capacitors (for three multiplier input terminals) and six diodes, two for each voltage multiplier input terminal.

Thereby, a simple implementation of the voltage multiplier may be provided which has relatively low weight and is less complicated in design.

According to an embodiment of the present invention, a capacitance of voltage multiplier input capacitors for different voltage multiplier input terminals is of a same value. Thereby, the implementation may further be simplified while preserving the amplification function and rectifying function.

According to an embodiment of the present invention, the voltage multiplier comprises a voltage multiplier output capacitor connected between the voltage multiplier output terminals. The voltage multiplier output capacitor may also contribute to the amplification function of the voltage multiplier. Thereby, the amplification function may be accomplished using conventionally available electronic elements. Thereby the voltage boosting function may be accomplished using a simple circuit rather than a complicated switch-mode power supply.

According to an embodiment of the present invention, a capacitance of a voltage multiplier input capacitors for at least one (or in particular all) of the voltage multiplier input terminals is of a same value as a capacitance of the voltage multiplier output capacitor.

Thereby, the design may further be simplified. In other embodiments, the different voltage multiplier input capacitors may have different capacitances from each other and also may have a capacitance different from the capacity of the voltage multiplier output capacitor.

According to an embodiment of the present invention, the uninterruptible power supply further comprises a charging resistor connected between one of the voltage multiplier output terminals and one of the energy storage terminals, to limit an output current of the voltage multiplier.

The charging resistor may thereby protect the voltage multiplier from outputting too high current. The resistance of the charging resistor may for example be between 1 kOhm to 1 MOhm depending on how fast the energy storage should be charged in. Thereby, the voltage multiplier may effectively output boosted voltage. The purpose of this resistor may be to limit the output current from the multiplier (or limit the current drawn from the energy storage), in order to hold boosted voltage at the output terminals of the multiplier.

Thereby, a reliable operation of the uninterruptible power supply may be ensured.

According to an embodiment of the present invention, the voltage multiplier is adapted such that a voltage of the boosted DC voltage is between 1.3 and 2.5 as high as a voltage of the AC input power at the voltage multiplier input terminals.

The amplification by the factor between 1.3 and 2.5 may advantageously raise the voltage with which the external storage (when connected to the energy storage terminals) may be charged. A higher voltage may allow a high amount of energy to be stored within the external energy storage.

According to an embodiment of the present invention, the uninterruptible power supply further comprises a filter capacitor connected between the rectifier output terminals. The output of the rectifier may comprise ripple(s), i.e. may be comprised of a DC voltage superimposed with an oscillating signal. The filter capacitor may smooth the ripple(s) or reduce amplitudes of the ripple(s) in order to provide a cleaner DC output voltage.

According to an embodiment of the present invention, the uninterruptible power supply further comprises a diode arranged between one of the rectifier output terminals and one of the energy storage terminals such as to avoid current flow (in particular when the switch is closed) from the energy storage terminals to the filter capacitor at the rectifier output terminals.

The diode may have its anode connected to the rectifier output positive terminal and may have its cathode connected to the input positive terminal of the output converter. Thus, a normal current direction through this diode is directed from the rectifier towards the DC output terminal. A flow back into the rectifier (in particular from the external energy storage) is thereby prevented.

According to an embodiment of the present invention, the uninterruptible power supply further comprises a voltage sensor arranged and adapted for sensing an output voltage between the rectifier output terminals and/or for sensing a voltage between the AC input terminals, and a controller (in particular communicatively coupled to the voltage sensor) adapted to close the switch, when the sensed output voltage drops below a voltage threshold, thereby connecting the energy storage terminals to the DC output terminals.

The voltage sensor may in particular detect a failure and may transmit a signal indicating the voltage (or the failure) to the controller. The controller may comprise logic/arithmetic circuitry that may, upon receiving a (digital or analogue) signal from the voltage sensor, trigger the switch and control the switching state (open or closed) of the switch. The controller may further be adapted to open the switch, when the sensed output voltage reaches or exceeds the voltage threshold, thereby disconnecting the energy storage terminals from the DC output terminals. Thereby, an uninterruptible power supply may be ensured. The voltage may be sensed at different locations in a path from the AC input terminal to the rectifier output terminals or the DC output terminals.

According to an embodiment of the present invention, the uninterruptible power supply further comprises an inductor system connected between the AC input terminals and the rectifier for limiting an AC input current at start-up and transients. The inductor system in particular may comprise for each of the AC input terminals one inductor or several inductors. The inductor system may comprise one or more coils or wound wires. Thereby, the rectifier may be protected from damage.

According to an embodiment of the present invention, the output converter is operable for transforming output voltage and output current between the rectifier output terminals or between the energy storage terminals to a predefined output voltage and predefined output current at the DC output terminals. The output converter may serve to transform or modify the voltage provided by the rectifier and the voltage provided by the external energy storage to a voltage value required by a load. Further, the current may be transformed or modified to a required current by the load. The output converter may comprise a conventional switch-mode power supply.

According to an embodiment of the present invention, the uninterruptible power supply further comprises an energy storage, connected at the energy storage terminals, wherein the energy storage comprises a battery and/or an accumulator and/or a capacitor system. In particular, the energy storage may comprise a capacitor system allowing to store electric energy proportional to a square of a voltage applied between the energy storage terminals. In this case, the voltage multiplier is especially advantageous.

It should be understood that features individually or in any combination disclosed, described, explained or provided for an uninterruptible DC power supply may also, individually or in any combination, provided or applied to a method for providing uninterruptible power supply according to an exemplary embodiment of the present invention and vice versa.

According to an embodiment of the present invention it is provided a method for providing uninterruptible power supply, the method comprising: receiving AC input power at AC input terminals; providing a rectifier output power at rectifier output terminals using a rectifier connected to the AC input terminals, providing a boosted DC voltage at voltage multiplier output terminals using a voltage multiplier connected at voltage multiplier input terminals to the AC input terminals, closing a switch between energy storage terminals and input terminals of an output converter having output terminals connected to the DC output terminals, the energy storage terminals being connected to the voltage multiplier output terminals, and providing DC output power to a load at the DC output terminals connected to the voltage multiplier output terminals via the output converter.

It has to be noted that embodiments of the invention have been described with reference to different subject matters. In particular, some embodiments have been described with reference to method type claims whereas other embodiments have been described with reference to apparatus type claims. However, a person skilled in the art will gather from the above and the following description that, unless other notified, in addition to any combination of features belonging to one type of subject matter also any combination between features relating to different subject matters, in particular between features of the method type claims and features of the apparatus type claims is considered as to be disclosed with this document.

The aspects defined above and further aspects of the present invention are apparent from the examples of embodiment to be described hereinafter and are explained with reference to the examples of embodiment. The invention will be described in more detail hereinafter with reference to examples of embodiment but to which the invention is not limited.

### Brief Description of the Drawings

Embodiments of the present invention are now described with reference to the accompanying drawings. The invention is not restricted to the illustrated or described embodiments.
Fig. 1 schematically illustrates a circuit diagram of an uninterruptible power supply according to an embodiment of the present disclosure.
Fig. 2 illustrates in a schematical circuit diagram a voltage multiplier according to an embodiment of the present disclosure which may for example be comprised in the uninterruptible power supply illustrated in Fig. 1; and
Fig. 3 illustrates a circuit diagram of a conventional DC uninterruptible power supply with two switch-mode power supplies beside the energy storage.

### Detailed Description

The illustration in the drawings is in schematic form.

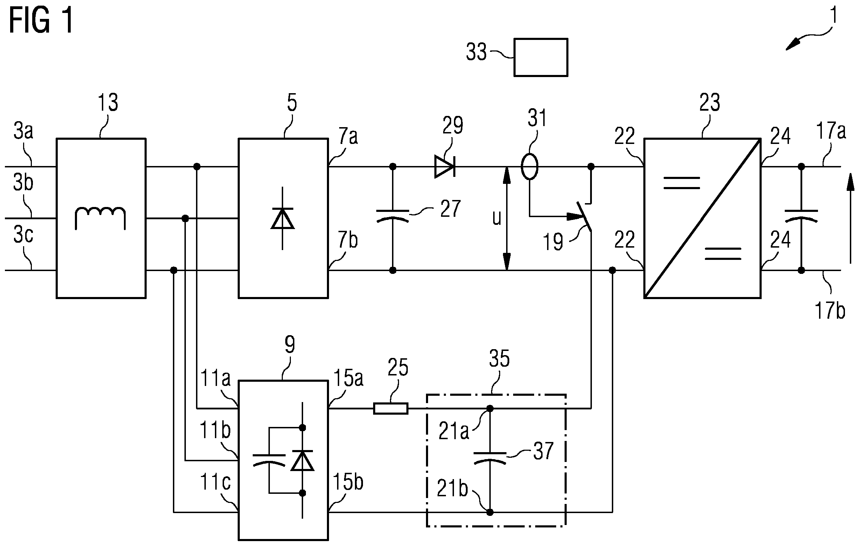

The uninterruptible power supply 1 according to an embodiment of the present disclosure illustrated as a schematic circuit diagram in **Fig. 1** comprises AC input terminals 3a, 3b and 3c for receiving AC input power. The power supply 1 further comprises a rectifier 5 connected to the AC input terminals 3a, 3b and 3c (via inductor system 13) for providing a rectifier output power at rectifier output terminals 7a, 7b. The power supply 1 further comprises a voltage multiplier 9 connected at voltage multiplier input terminals 11a, 11b, 11c to the AC input terminals 3a, 3b, 3c (via the inductor system 13). The voltage multiplier provides boosted DC voltage at voltage multiplier output terminals 15a, 15b.

The uninterruptible power supply 1 optionally comprises an inductor system 13 connected between the AC input terminals 3a, 3b, 3c and the rectifier 5 and also connected between the AC input terminals 3a, 3b, 3c and the voltage multiplier 9. The uninterruptible power supply 1 further comprises DC out-put terminals 17a, 17b connectable (via switch 19 and switch-mode power supply 23) to the voltage multiplier output terminals 15a, 15b for providing DC output power to a load. The power supply 1 further comprises a switch 19 and energy storage terminals 21a, 21b connected to the voltage multiplier output terminals 15a, 15b and connectable via the switch 19 to the DC output terminals 17a, 17b, via an output converter 23.

The output converter 23 has input terminals 22, has output terminals 24 connected to the DC output terminals 17a, 17b and provides an interface to the load (connectable at the DC output terminals 17a, 17b). The output converter 23 may also be or comprise a switch-mode power supply with one or more magnetic components. Furthermore, this converter, 23 may be a DC to AC inverter. Then the UPS will be an AC UPS instead of a DC UPS.

The uninterruptible power supply 1 further comprises a charging resistor 25 connected between one of the voltage multiplier output terminals (i.e. output terminal 15a) and one of the energy storage terminals (i.e. 21a), to limit an output current of the voltage multiplier 9. The uninterruptible power supply 1 further comprises a filter capacitor 27 connected between the rectifier output terminals 7a, 7b.

The power supply 1 further comprises a rectifier output diode 29 arranged between one of the rectifier output terminals (i.e. 7a) and one of the energy storage terminals (i.e. 21a) such as to prohibit current flow from the energy storage terminals to the filter capacitor 27.

The uninterruptible power supply 1 further comprises a voltage sensor 31 arranged and adapted for sensing an output voltage between the rectifier output terminals and further comprises a controller 33 adapted to close the switch 19, when the sensed output voltage drops below a voltage threshold, thereby connecting the energy storage terminals 21a, 21b to the DC output terminals 17a, 17b.

The optional inductor system 13 is connected between the AC input terminals 3a, 3b, 3c and the rectifier 5 (as well as the voltage multiplier 9) for limiting an AC input current.

The output converter 23 is connected between the rectifier output terminals 7a, 7b and the DC output terminals 17a, 17b for transforming output voltage and output current between the rectifier output terminals 7a, 7b or between the energy storage terminals 21a, 21b to a predefined output voltage and predefined output current at the DC output terminals 17a, 17b, as required by a load connectable at 17a, 17b.

The uninterruptible DC power supply 1 further comprises in the illustrated embodiment an energy storage 35 which in the illustrated embodiment comprises a capacitor 37 or a capacitor system.

The uninterruptible power supply illustrated in Fig. 1 as a schematic circuit diagram dispenses with the charging converter stage which is used in the prior art and replaces it with a voltage multiplier. The removal of this conventional state thereby avoids bulky electromagnetic components along with the lossy switching power conversion.

The charging task of the external energy storage may be done in an inductor-less, DC-DC conversion-less solution. Three-phase voltage multiplier 9 is proposed for this task as is illustrated in Fig. 1. The block of the voltage multiplier 9 may be situated or stand inside the power supply board or in the energy storage depending on the requirements and application.

An electronic arrangement 31 may be provided to monitor the voltage at the output of the three-phase rectifier. When this voltage U is lower than the set threshold voltage, an electronic switch 19 can be automatically (for example using the controller 33) turned on to connect the external energy storage 35 to the DC output terminals 17a, 17b. Once the voltage U at the rectifier 5 is back at the voltage threshold or exceeds the voltage threshold, the switch 19 can be set to turn off to disconnect the external energy storage 35 from the DC output terminals 17a, 17b. The illustrated UPS 1 can be retrofitted to the existing electrical system.

An input power at terminals 3a, 3b, 3c may e.g. be 3-phase 200 VAC. The output power at terminals 17a, 17b may e.g. 110 VDC, 350 W.

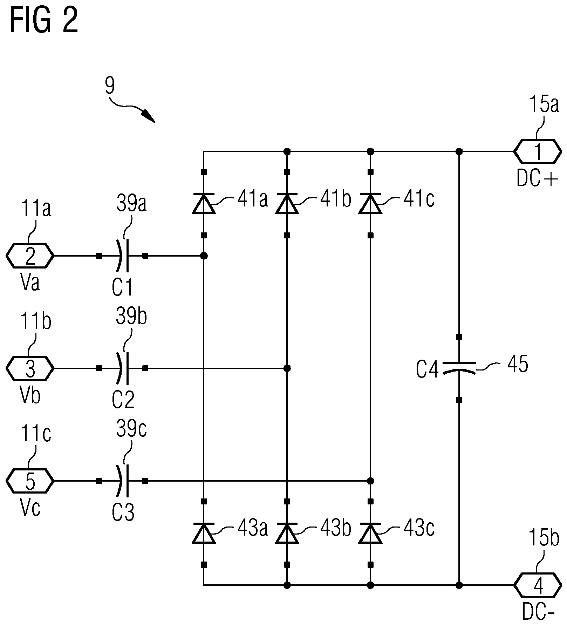

**Fig. 2** illustrates in a schematic circuit diagram a voltage multiplier 9 according to an embodiment of the present disclosure.

The voltage multiplier 9 comprises the voltage multiplier input terminals 11a, 11b and 11c. For the voltage multiplier input terminal 11a, the voltage multiplier 9 comprises a voltage multiplier input capacitor 39a as well as a first diode 41a and a second diode 43a. The first diode 41a and the second diode 43a are connected in series between the voltage multiplier output terminals 15a and 15b. The voltage multiplier input capacitor 39a has one terminal connected to the voltage multiplier input terminal 11a and another terminal connected between the first diode 41a and 43a. Similarly, also the other voltage multiplier input terminals 11b and 11c each comprise a respective voltage multiplier input capacitor 39b, 39c and another first diode 41b, another second diode 43b and a further other first diode 41c and a further other second diode 43c, respectively.

The voltage multiplier 9 illustrated in Fig. 2 further comprises a voltage multiplier output capacitor 45 connected between the voltage multiplier output terminals 15a, 15b. The capacitors 39a, 39b, 39c, 45 may have a substantially same capacity. For example, the capacitance may be between 100 µF and 500 µF. The voltage multiplier may multiply the voltage at the voltage multiplier input terminals 11a, 11b, 11c by a factor between 1.5 and 2.5 to a voltage at the voltage multiplier output terminals 15a, 15b. Thereby, advantageously, an external energy storage may be charged to hold a relatively large amount of energy.

The voltage multiplier 9 may also be considered as a diode rectifier with a few capacitors. A stable, stepped up/boosted DC voltage may be produced at the voltage multiplier output terminals 15a, 15b to charge an external energy storage 35 (for example a battery or a capacitor bank) without using DC-DC boost or buck-boost conversion. Thereby, in these charging stage (for example the voltage multiplier 9), no DC-DC converter may be required. Thereby, the total efficiency may be increased by 5-20% depending on the power level.

Furthermore, no inductors or high frequency transformers may be required in the charging stage 9 during charging the energy storage. Thereby, the power supply may be simpler in design and lighter in weight. Design and production time may be shorter. Shock and vibration qualifications may be easier.

Electromagnetic interference level may be lower due to the absence of one switching conversion level.

Cooling measures may be easier due to absence of one converter level.

A number of components may be largely reduced due to the replacement of a DC-DC converter by a simple voltage multiplier. Thereby, reliability of the uninterruptible power supply may be ensured.

The efficiency of a DC-DC converter may largely depend on the operational power level, topology, tuning and layout design. The efficiency may vary in the range 70-95% for one converter level. The efficiency above 90% is achieved usually with soft switching topology (>300 W). The drawback of these topologies is the demand of several electromagnetic components which leads to higher weights than that of a simpler conversion with poorer efficiency. Therefore, either way, it may be a trade-off between the efficiency and complexity/weight of the design.

The replacement of a conversion level with a simple rectifier with a few capacitors (voltage multiplier 9 illustrated in Figs. 1 or 2) may result in the efficiency to remain in as high as 98% or more. Voltage multipliers may operate at the line frequency (50 Hz or 60 Hz) in which the diode switching losses may be small, in particular negligible. Electromagnetic components may add localized weight to the printed circuit board. At random vibration testing, these weights may cause problems in conventional system or switch-mode power supplies. Therefore, special mechanical clampers may be required to hold such components tight to the chassis. Absence of such weights alleviates the requirements in terms of shock and vibration qualification, as is provided by embodiments of the present disclosure.

Absence of high frequency switching conversion level may mean that the dv/dt and di/dt due to switching will be avoided in the charging stage. Therefore, the radiated and conducted emission levels from the power supply board as a whole may be reduced.

A switching converter may need cooling due to high switching losses (assuming hard switching) but a voltage doubler (according to an embodiment of the present disclosure) does not get heated up due to the very low operational frequency. Therefore, the cooling requirements of embodiments of the present disclosure may be reduced or may be even minimal.

The voltage multiplier 9 illustrated in Figs. 1 and 2 may be limited by a low output current, to maintain stable high output voltage. If the allowed charging time is several minutes (which is the normal case), low current output may not be an issue. Therefore, higher charging resistor (for example charging resistor 25) having a resistance in a range of kOhms may be recommended.

The UPS may be more compact and more efficient and more reliable compared to a conventional UPS. For the voltage multiplier 9, alternative topologies are also considered and proposed. For example, a voltage doubler, a voltage tripler, etc. may be used instead of voltage multiplier as illustrated in Fig. 2. This solution may be scaled down for single-phase input as well. The same solution may be designed to operate in both single and three-phase input lines. The topology can be adopted for single or three-phase AC UPS systems as well. The main difference in AC UPS is that output converter 23 will be a DC-AC inverter.

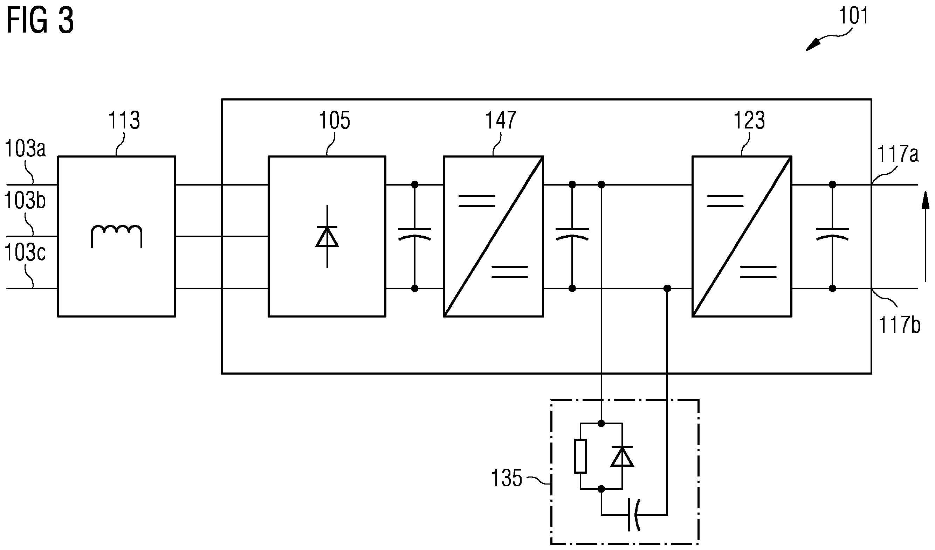

**Fig. 3** schematically illustrates a UPS 101 according to the prior art. The prior art UPS 101 comprises an inductor system 113, a rectifier 105, a charging converter 147, an output converter 123 to provide uninterrupted power supply from AC input terminals 103a, 103b, 103c to DC output terminals 117a, 117b.

The charging converter 147 is relatively heavy and has a complex design. The weight may be around 2 kg and the component count of the charging converter 147 may be more than 400 components. The embodiments of the present disclosure may reduce or even avoid one or some problems of the prior art.

It should be noted that the term "comprising" does not exclude other elements or steps and "a" or "an" does not exclude a plurality. Also elements described in association with different embodiments may be combined. It should also be noted that reference signs in the claims should not be construed as limiting the scope of the claims.

## Claims

1. Uninterruptible power supply (1), comprising:
AC input terminals (3a,3b,3c) for receiving AC input power;
a rectifier (5) connected to the AC input terminals (3a,3b,3c) for providing a rectifier output power at rectifier output terminals (7a,7b);
a voltage multiplier (9) connected at voltage multiplier input terminals (11a,11b,11c) to the AC input terminals (3a,3b,3c) for providing a boosted DC voltage at voltage multiplier output terminals (15a,15b);
DC output terminals (17a, 17b);
an output converter (23) connected between the rectifier output terminals (7a,7b) and the DC output terminals (17a, 17b), the DC output terminals (17a, 17b) being connectable via the output converter (23) to the voltage multiplier output terminals for providing DC output power to a load;
a switch (19); and
energy storage terminals (21a, 21b) connected to the voltage multiplier output terminals (15a, 15b) and connectable via the switch (19) and the output converter (23) to the DC output terminals (17a, 17b)

2. Uninterruptible power supply according to claim 1, wherein the voltage multiplier (9) comprises:
for each of the, in particular three, voltage multiplier input terminals (11a,11b,11c):
a voltage multiplier input capacitor (39a,39b,39c,C1, C2, C3);
a first diode (41a,41b,41c) and a second diode (43a,43b,43c);
wherein the first diode and the second diode is connected between the voltage multiplier output terminals,
wherein the voltage multiplier input capacitor has one terminal connected to the respective voltage multiplier input terminal and another terminal connected between the first diode and the second diode.

3. Uninterruptible power supply according to claim 2, wherein a capacitance of voltage multiplier input capacitors (39a,39b,39c,C1, C2, C3) for different voltage multiplier input terminals is of a same value.

4. Uninterruptible power supply according to the preceding claim, wherein the voltage multiplier comprises:
a voltage multiplier output capacitor (45, C4) connected between the voltage multiplier output terminals (15a,15b).

5. Uninterruptible power supply according to the preceding claim 2 to 4, wherein a capacitances of a voltage multiplier input capacitors (39a,39b,39c,C1, C2, C3) for at least one of the voltage multiplier input terminals is of a same value as a capacitance of the voltage multiplier output capacitor (45, C4) .

6. Uninterruptible power supply according to one of the preceding claims, further comprising:
a charging resistor (25) connected between one of the voltage multiplier output terminals (11a,11b,11c) and one of the energy storage terminals (21a,21b), to limit the output current of the voltage multiplier.

7. Uninterruptible power supply according to one of the preceding claims, wherein the voltage multiplier (9) is adapted such that a voltage of the boosted DC voltage is between 1.3 and 2.5 as high as the peak voltage of the AC input voltage at the voltage multiplier input terminals (11a,11b,11c).

8. Uninterruptible power supply according to one of the preceding claims, further comprising:
a filter capacitor or several parallel capacitors (27) connected between the rectifier output terminals (7a,7b).

9. Uninterruptible power supply according to claim 8, further comprising: a diode (29) arranged between one of the rectifier output terminals (7a,7b) and one of the energy storage terminals (21a, 21b) such as to avoid current flow from the energy storage terminals to the filter capacitor (27).

10. Uninterruptible power supply according to one of the preceding claims, further comprising:
a voltage sensor (31) arranged and adapted for sensing an output voltage between the rectifier output terminals and/or for sensing a voltage between the AC input terminals; and
a controller (33) adapted to close the switch, when the sensed output voltage drops below a voltage threshold, thereby connecting the energy storage terminals to the DC output terminals through the output converter (23).

11. Uninterruptible power supply according to one of the preceding claims, further comprising:
an inductor system (13) connected between the AC input terminals (3a,3b,3c) and the rectifier (5) for limiting a AC input current.

12. Uninterruptible power supply according to one of the preceding claims, wherein the output converter (23) is operable for converting output voltage and output current
between the rectifier output terminals (7a,7b) or
between the energy storage terminals (21a,21b) to a predefined output voltage and predefined output current at the DC output terminals (17a, 17b).

13. Uninterruptible power supply according to one of the preceding claims, further comprising:
an energy storage (35), connected at the energy storage terminals (21a, 21b),
wherein the energy storage comprises a battery and/or an accumulator and/or a capacitor system (37).

14. Method for providing uninterruptible power supply, the method comprising:
receiving AC input power at AC input terminals (3a,3b,3c);
providing a rectifier DC output power at rectifier output terminals (7a,7b,7c) using a rectifier (5) connected to the AC input terminals;
providing boosted DC voltage at voltage multiplier output terminals (15a, 15b) using a voltage multiplier (9) connected at voltage multiplier input terminals (11a,11b,11c) to the AC input terminals;
closing a switch (19) between energy storage terminals (21a, 21b) and input terminals (22) of an output converter (23), the energy storage terminals being connected to the input terminals (22) of the output converter (23); and
providing DC output power to a load at the DC output terminals (17a, 17b) connected to the output converter output terminals (24).

## Patentansprüche

1. Unterbrechungsfreie Stromversorgung (1), umfassend:
AC-Eingangsanschlüsse (3a, 3b, 3c) zum Empfangen einer AC-Eingangsleistung;
einen Gleichrichter (5), der mit den AC-Eingangsanschlüssen (3a, 3b, 3c) verbunden ist, um eine Gleichrichter-Ausgangsleistung an den Gleichrichter-Ausgangsanschlüssen (7a, 7b) bereitzustellen;
einen Spannungsvervielfacher (9), der an den Spannungsvervielfacher-Eingangsanschlüssen (11a, 11b, 11c) mit den AC-Eingangspolen (3a, 3b, 3c) verbunden ist, um eine verstärkte DC-Spannung an den Spannungsvervielfacher-Ausgangsanschlüssen (15a, 15b) bereitzustellen;
DC-Ausgangsanschlüsse (17a, 17b);
einen Ausgangsumrichter (23), der zwischen die Gleichrichter-Ausgangsanschlüsse (7a, 7b) und die DC-Ausgangsanschlüsse (17a, 17b) geschaltet ist, wobei die DC-Ausgangsanschlüsse (17a, 17b) über den Ausgangsumrichter (23) mit den Spannungsvervielfacher-Ausgangsanschlüssen verbunden werden können, um einen DC-Ausgangsleistung für eine Last bereitzustellen;
einen Schalter (19); und
Energiespeicheranschlüsse (21a, 21b), die mit den Spannungsvervielfacher-Ausgangsanschlüssen (15a, 15b) verbunden sind und über den Schalter (19) und den Ausgangsumrichter (23) mit den DC-Ausgangsanschlüssen (17a, 17b) verbunden werden können.

2. Unterbrechungsfreie Stromversorgung nach Anspruch 1, wobei der Spannungsvervielfacher (9) Folgendes umfasst:
für jeden der, im Speziellen drei, Spannungsvervielfacher-Eingangsanschlüsse (11a, 11b, 11c):
einen Spannungsvervielfacher-Eingangskondensator (39a, 39b, 39c, C1, C2, C3) ;
eine erste Diode (41a, 41b, 41c) und eine zweite Diode (43a, 43b, 43c);
wobei die erste Diode und die zweite Diode zwischen die Spannungsvervielfacher-Ausgangsanschlüsse geschaltet sind,
wobei der Spannungsvervielfacher-Eingangskondensator einen Anschluss hat, der mit dem jeweiligen Spannungsvervielfacher-Eingangsanschluss verbunden ist, und einen weiteren Anschluss, der zwischen die erste Diode und die zweite Diode geschaltet ist.

3. Unterbrechungsfreie Stromversorgung nach Anspruch 2, wobei eine Kapazität der Spannungsvervielfacher-Eingangskondensatoren (39a, 39b, 39c, C1, C2, C3) für unterschiedliche Spannungsvervielfacher-Eingangsanschlüsse denselben Wert hat.

4. Unterbrechungsfreie Stromversorgung nach dem vorhergehenden Anspruch, wobei der Spannungsvervielfacher Folgendes umfasst:
einen Spannungsvervielfacher-Ausgangskondensator (45, C4), der zwischen die Spannungsvervielfacher-Ausgangsanschlüsse (15a, 15b) geschaltet ist.

5. Unterbrechungsfreie Stromversorgung nach den vorhergehenden Ansprüchen 2 bis 4, wobei eine Kapazität der Spannungsvervielfacher-Eingangskondensatoren (39a, 39b, 39c, C1, C2, C3) für mindestens einen der Spannungsvervielfacher-Eingangsanschlüsse denselben Wert wie eine Kapazität des Spannungsvervielfacher-Ausgangskondensators (45, C4) hat.

6. Unterbrechungsfreie Stromversorgung nach einem der vorhergehenden Ansprüche, ferner Folgendes umfassend:
einen Ladewiderstand (25), der zwischen einen der Spannungsvervielfacher-Ausgangsanschlüsse (11a, 11b, 11c) und einen der Energiespeicheranschlüsse (21a, 21b) geschaltet ist, um den Ausgangsstrom des Spannungsvervielfachers zu begrenzen.

7. Unterbrechungsfreie Stromversorgung nach einem den vorhergehenden Ansprüche, wobei der Spannungsvervielfacher (9) derartig ausgelegt ist, dass eine Spannung der verstärkten DC-Spannung zwischen 1,3- und 2,5-mal so hoch ist wie die Spitzenspannung der AC-Eingangsspannung an den Spannungsvervielfacher-Eingangsanschlüssen (11a, 11b, 11c).

8. Unterbrechungsfreie Stromversorgung nach einem der vorhergehenden Ansprüche, ferner Folgendes umfassend:
einen Filterkondensator oder mehrere Parallelkondensatoren (27), die zwischen die Gleichrichter-Ausgangsanschlüsse (7a,7b) geschaltet sind.

9. Unterbrechungsfreie Stromversorgung nach Anspruch 8, ferner Folgendes umfassend:
eine Diode (29), die zwischen einem von den Gleichrichter-Ausgangsanschlüssen (7a, 7b) und einem von den Energiespeicheranschlüssen (21a, 21b) angeordnet ist, um so einen Stromfluss von den Energiespeicheranschlüssen zum Filterkondensator (27) zu verhindern.

10. Unterbrechungsfreie Stromversorgung nach einem der vorhergehenden Ansprüche, ferner Folgendes umfassend:
einen Spannungssensor (31), der angeordnet und dafür ausgelegt ist, eine Ausgangsspannung zwischen den Gleichrichter-Ausgangsanschlüssen und/oder eine Spannung zwischen den AC-Eingangsanschlüssen zu erfassen; und
eine Steuereinheit (33), die dafür ausgelegt ist, den Schalter zu schließen, wenn die erfasste Ausgangsspannung unter einen Spannungsschwellenwert absinkt, und dadurch die Energiespeicheranschlüsse über den Ausgangsumrichter (23) mit den DC-Ausgangsanschlüssen zu verbinden.

11. Unterbrechungsfreie Stromversorgung nach einem der vorhergehenden Ansprüche, ferner Folgendes umfassend:
ein Induktorsystem (13), das zwischen die AC-Eingangsanschlüsse (3a, 3b, 3c) und den Gleichrichter (5) geschaltet ist, um einen AC-Eingangsstrom zu begrenzen.

12. Unterbrechungsfreie Stromversorgung nach einem der vorhergehenden Ansprüche, wobei der Ausgangsumrichter (23) funktionsfähig ist, Ausgangsspannung und Ausgangsstrom
zwischen den Gleichrichter-Ausgangsanschlüssen (7a, 7b) oder
zwischen den Energiespeicheranschlüssen (21a, 21b) in eine vorgegebene Ausgangsspannung und einen vorgegebenen Ausgangsstrom an den DC-Ausgangsanschlüssen (17a, 17b) umzuwandeln.

13. Unterbrechungsfreie Stromversorgung nach einem der vorhergehenden Ansprüche, ferner Folgendes umfassend:
einen Energiespeicher (35), der an den Energiespeicheranschlüssen (21a, 21b) verbunden ist, wobei der Energiespeicher eine Batterie und/oder einen Akkumulator und/oder ein Kondensatorsystem (37) umfasst.

14. Verfahren zur Bereitstellung einer unterbrechungsfreien Stromversorgung, wobei das Verfahren Folgendes umfasst:
Empfangen einer AC-Eingangsleistung an den AC-Eingangsanschlüssen (3a, 3b, 3c);
Bereitstellen einer Gleichrichter-DC-Ausgangsleistung an den Gleichrichter-Ausgangsanschlüssen (7a, 7b, 7c) unter Verwendung eines mit den AC-Eingangsanschlüssen verbundenen Gleichrichters (5);
Bereitstellen verstärkter DC-Spannung an den Spannungsvervielfacher-Ausgangsanschlüssen (15a, 15b) unter Verwendung eines Spannungsvervielfachers (9), der an den Spannungsvervielfacher-Eingangsanschlüssen (11a, 11b, 11c) mit den AC-Eingangsanschlüssen verbunden ist;
Schließen eines Schalters (19) zwischen Energiespeicheranschlüssen (21a, 21b) und Eingangsanschlüssen (22) eines Ausgangsumrichters (23), wobei die Energiespeicheranschlüsse mit den Eingangsanschlüssen (22) des Ausgangsumrichters (23) verbunden sind; und
Bereitstellen einer DC-Ausgangsleistung für eine Last an den DC-Ausgangsanschlüssen (17a, 17b), die mit den Ausgangsumrichter-Ausgangsanschlüssen (24) verbunden sind.

## Revendications

1. Un bloc d'alimentation électrique sans coupure (1), comprenant :
des bornes d'entrée c.a. (3a, 3b, 3c) destinées à la réception d'une alimentation électrique en entrée c.a.,
un redresseur (5) raccordé aux bornes d'entrée c.a. (3a, 3b, 3c) destiné à la fourniture d'une alimentation électrique en sortie de redresseur au niveau des bornes de sortie de redresseur (7a, 7b),
un multiplicateur de tension (9) raccordé au niveau des bornes d'entrée de multiplicateur de tension (11a, 11b, 11c) aux bornes d'entrée c.a. (3a, 3b, 3c) destiné à la fourniture d'une tension c.c. amplifiée au niveau des bornes de sortie de multiplicateur de tension (15a, 15b),
des bornes de sortie c.c. (17a, 17b),
un convertisseur de sortie (23) raccordé entre les bornes de sortie de redresseur (7a, 7b) et les bornes de sortie c.c. (17a, 17b), les bornes de sortie c.c. (17a, 17b) pouvant être raccordées par l'intermédiaire du convertisseur de sortie (23) aux bornes de sortie de multiplicateur de tension de façon à fournir une alimentation électrique en sortie c.c. à une charge,
un commutateur (19), et
des bornes de stockage d'énergie (21a, 21b) raccordées aux bornes de sortie de multiplicateur de tension (15a, 15b) et pouvant être raccordées par l'intermédiaire du commutateur (19) et du convertisseur de sortie (23) aux bornes de sortie c.c. (17a, 17b).

2. Le bloc d'alimentation électrique sans coupure selon la revendication 1, dans lequel le multiplicateur de tension (9) comprend :
pour chacune des, plus particulièrement trois, bornes d'entrée de multiplicateur de tension (11a, 11b, 11c) :
un condensateur d'entrée de multiplicateur de tension (39a, 39b, 39c, C1, C2, C3),
une première diode (41a, 41b, 41c) et une deuxième diode (43a, 43b, 43c),
la première diode et la deuxième diode étant raccordées entre les bornes de sortie de multiplicateur de tension,
le condensateur d'entrée de multiplicateur de tension possédant une borne raccordée à la borne d'entrée de multiplicateur de tension respective et une autre borne raccordée entre la première diode et la deuxième diode.

3. Le bloc d'alimentation électrique sans coupure selon la revendication 2, dans lequel une capacité de condensateurs d'entrée de multiplicateur de tension (39a, 39b, 39c, C1, C2, C3) pour des bornes d'entrée de multiplicateur de tension différentes est d'une même valeur.

4. Le bloc d'alimentation électrique sans coupure selon la revendication précédente, dans lequel le multiplicateur de tension comprend :
un condensateur de sortie de multiplicateur de tension (45, C4) raccordé entre les bornes de sortie de multiplicateur de tension (15a, 15b).

5. Le bloc d'alimentation électrique sans coupure selon les revendications précédentes 2 à 4, dans lequel une capacité d'un condensateur d'entrée de multiplicateur de tension (39a, 39b, 39c, C1, C2, C3) pour au moins une des bornes d'entrée de multiplicateur de tension est d'une même valeur qu'une capacité du condensateur de sortie de multiplicateur de tension (45, C4).

6. Le bloc d'alimentation électrique sans coupure selon l'une quelconque des revendications précédentes, comprenant en outre :
une résistance de charge (25) raccordée entre une des bornes de sortie de multiplicateur de tension (11a, 11b, 11c) et une des bornes de stockage d'énergie (21a, 21b), destinée à limiter le courant de sortie du multiplicateur de tension.

7. Le bloc d'alimentation électrique sans coupure selon l'une quelconque des revendications précédentes, dans lequel le multiplicateur de tension (9) est adapté de sorte qu'une tension de la tension c.c. amplifiée se situe entre 1,3 et 2,5 fois la tension de crête de la tension d'entrée c.a. au niveau des bornes d'entrée de multiplicateur de tension (11a, 11b, 11c) .

8. Le bloc d'alimentation électrique sans coupure selon l'une quelconque des revendications précédentes, comprenant en outre :
un condensateur de filtrage ou plusieurs condensateurs parallèles (27) raccordés entre les bornes de sortie de redresseur (7a, 7b).

9. Le bloc d'alimentation électrique sans coupure selon la revendication 8 comprenant en outre :
une diode (29) agencée entre une des bornes de sortie de redresseur (7a, 7b) et une des bornes de stockage d'énergie (21a, 21b) de façon à éviter un flux de courant à partir des bornes de stockage d'énergie vers le condensateur de filtrage (27).

10. Le bloc d'alimentation électrique sans coupure selon l'une quelconque des revendications précédentes, comprenant en outre :
un capteur de tension (31) agencé et adapté de façon à détecter une tension en sortie entre les bornes de sortie de redresseur et/ou de façon à détecter une tension entre les bornes d'entrée c.a., et
un dispositif de commande (33) adapté de façon à fermer le commutateur lorsque la tension en sortie détectée chute sous une tension seuil, raccordant ainsi les bornes de stockage d'énergie aux bornes de sortie c.c. par l'intermédiaire du convertisseur de sortie (23).

11. Le bloc d'alimentation électrique sans coupure selon l'une quelconque des revendications précédentes, comprenant en outre :
un système inducteur (13) raccordé entre les bornes d'entrée c.a. (3a, 3b, 3c) et le redresseur (5) destiné à limiter un courant en entrée c.a.

12. Le bloc d'alimentation électrique sans coupure selon l'une quelconque des revendications précédentes, dans lequel le convertisseur de sortie (23) est conçu de façon à convertir une tension en sortie et un courant en sortie entre les bornes de sortie de redresseur (7a, 7b) ou entre les bornes de stockage d'énergie (21a, 21b) en une tension en sortie prédéfinie et un courant en sortie prédéfini au niveau des bornes de sortie c.c. (17a, 17b).

13. Le bloc d'alimentation électrique sans coupure selon l'une quelconque des revendications précédentes, comprenant en outre :
un dispositif de stockage d'énergie (35), raccordé au niveau des bornes de stockage d'énergie (21a, 21b), le dispositif de stockage d'énergie comprenant une batterie et/ou un accumulateur et/ou un système condensateur (37).

14. Un procédé de fourniture d'un bloc d'alimentation électrique sans coupure, le procédé comprenant :
la réception d'une alimentation électrique en entrée c.a. au niveau des bornes d'entrée c.a. (3a, 3b, 3c),
la fourniture d'une alimentation électrique en sortie c.c. de redresseur au niveau des bornes de sortie de redresseur (7a, 7b, 7c) au moyen d'un redresseur (5) raccordé aux bornes d'entrée c.a.,
la fourniture d'une tension c.c. amplifiée au niveau des bornes de sortie de multiplicateur de tension (15a, 15b) au moyen d'un multiplicateur de tension (9) raccordé au niveau des bornes d'entrée de multiplicateur de tension (11a, 11b, 11c) aux bornes d'entrée c.a.,
la fermeture d'un commutateur (19) entre des bornes de stockage d'énergie (21a, 21b) et des bornes d'entrée (22) d'un convertisseur de sortie (23), les bornes de stockage d'énergie étant raccordées aux bornes d'entrée (22) du convertisseur de sortie (23), et
la fourniture d'une alimentation électrique en sortie c.c. à une charge au niveau des bornes de sortie c.c. (17a, 17b) raccordée aux bornes de sortie de convertisseur de sortie (24).
